(19) Europäisches Patentamt
European Patent Office
Office européen des brevets

(11) **EP 0 852 533 B2**

(12) **NEUE EUROPÄISCHE PATENTSCHRIFT**

(45) Veröffentlichungstag und Bekanntmachung des Hinweises auf die Entscheidung über den Einspruch:
**14.09.2005 Patentblatt 2005/37**

(45) Hinweis auf die Patenterteilung:
**10.02.1999 Patentblatt 1999/06**

(21) Anmeldenummer: **96929231.7**

(22) Anmeldetag: **09.08.1996**

(51) Int Cl.⁷: **B29C 47/40**, B29B 7/00

(86) Internationale Anmeldenummer:
**PCT/EP1996/003531**

(87) Internationale Veröffentlichungsnummer:
**WO 1997/012746 (10.04.1997 Gazette 1997/16)**

(54) **VERFAHREN ZUR DURCHFÜHRUNG KONTINUIERLICHER AUFBEREITUNGSPROZESSE AUF GLEICHSINNIG DREHENDEN, DICHTKÄMMENDEN EXTRUDERN**

METHOD OF CARRYING OUT CONTINUOUS PREPARATION PROCESSES ON TIGHTLY MESHING EXTRUDERS ROTATING IN THE SAME SENSE

PROCEDE RELATIF A L'EXECUTION D'OPERATIONS DE PREPARATION EN CONTINU SUR DES EXTRUDEUSES POURVUES DE VIS TOURNANT DANS LE MEME SENS ET A ENTRECROISEMENT SERRE

(84) Benannte Vertragsstaaten:
**AT BE CH DE ES FI FR GB IT LI NL SE**

(30) Priorität: **29.09.1995 DE 19536289**

(43) Veröffentlichungstag der Anmeldung:
**15.07.1998 Patentblatt 1998/29**

(73) Patentinhaber: **Coperion Werner & Pfleiderer GmbH & Co. KG**
**70469 Stuttgart (DE)**

(72) Erfinder:
• **HEIDEMEYER, Peter**
  **D-70437 Stuttgart (DE)**
• **HÄRING, Erwin**
  **D-70159 Stuttgart (DE)**
• **MUNZ, Rainer**
  **D-71540 Murrhardt (DE)**
• **HERTER, Rainer**
  **D-71254 Ditzingen (DE)**
• **BURKHARDT, Ulrich**
  **D-70732 Stuttgart (DE)**

(74) Vertreter: **Hübner, Gerd**
  **Rau, Schneck & Hübner**
  **Patentanwälte**
  **Königstrasse 2**
  **90402 Nürnberg (DE)**

(56) Entgegenhaltungen:
**WO-A-92/17522**

• **DATABASE WPI Week 9324 Derwent Publications Ltd., London, GB; AN 93-191034 XP002020575 & JP,A,05 116 140 (MITSUBISHI KASEI POLYTEC CO) , 14.Mai 1993**
• **JAPAN PLASTICS, Bd. 9, Nr. 1, Januar 1975, TOKYO, Seiten 18-25, XP002020571 FUMIO AIDA: "Investigation of Ultra-High Speed Extruder Based on Entirely New Design Concept"**
• **PLASTICS ENGINEERING, Bd. 35, Nr. 4, April 1979, MANCHESTER, NEW HAMPSHIRE, USA, Seiten 29-33, XP002020572 GEORGE A. KRUDER & R. E. RIDENOUR: "New concepts spur development of ultra-high-speed extrusion"**
• **KUNSTSTOFFE, Bd. 52, Nr. 4, April 1962, MUNCHEN DE, Seiten 213-217, XP002020573 E. BECK : "Betriebsverhalten und Praxisergebnisse von schnellaufenden Schneckenpressen"**
• **ZEHEV TADMOR &IMRICH KLEIN: "ENGINEERING PRINCIPLES OF PLASTICATING EXTRUSION" 1989 , ROBERT E. KRIEGER PUBLISHING COMPANY , MALABAR, FLORIDA XP002020574 158240 siehe Seite 8, Zeile 3 - Seite 9, Zeile 4**
• **Kunststoffe 75 (1985) 2 (seiten V-XVI), M. Herrmann "Aufbereitung des KUnststoff-Rohstoffs"**

EP 0 852 533 B2

**Beschreibung**

Die Erfindung betrifft ein Verfahren zur Durchführung kontinuierlicher Aufbereitungsprozesse auf gleichsinnig drehenden, dichtkämmenden Extrudern gemäß dem Oberbegriff des Anspruchs 1.

Gleichsinnig drehende, dichtkämmende Doppelschnecken- und Mehrwellenschneckenextruder werden für kontinuierliche Knetprozesse mit oder ohne Aufschmelzung eingesetzt. Hierbei sind häufig auch kontinuierliche Entgasungs- Misch- und Expandiervorgänge integriert und in einigen Fällen werden die Extruder auch für Reaktionen eingesetzt.

Die verarbeitbaren Produkte umfassen Kunststoffe, Harze, Flüssigkeiten, zähplastische Massen, pulver- und faserförmige Zusatzstoffe sowie Foodmassen. Der Austrag kann beispielsweise über Filter und Formgebungsprozesse, wie Granulierungen oder Profilextrusion, stattfinden.

Es sind Extruder der eingangs genannten Art bekannt, bei denen der Schneckendurchmesser bis zu 340 mm beträgt. Die Durchsätze betragen 5.000 bis 35.000 kg/h bei einem Verhältnis Schneckenaußendurchmesser zu Schneckeninnendurchmesser ($D_a/D_i$) von 1,18 bis 1,25 bzw. von 1,4 bis 1,6. Das Verhältnis Drehmoment zum Achsabstand$^3$ ($M_d/a^3$) - die sogenannte "Drehmomentdichte" - weist Werte zwischen 5 und 10 auf. Je nach Größe der Extruder werden Drehzahlen von 200 bis 500 Upm - in Ausnahmefällen auch bis 600 Upm - gefahren.

Die Auslegung der Extruder erfolgt üblicherweise nach dem Prinzip der geometrischen und drehmomentbezogenen Ähnlichkeit. Geometrische Ähnlichkeit besteht, wenn das Verhältnis $D_a/D_i$ konstant ist; drehmomentbezogene Ähnlichkeit besteht, wenn das Verhältnis $M_d/a^3$ konstant ist.

Ein maßgeblicher Faktor für die Dispergier-, Misch- und Homogenisiervngsgüte des verarbeiteten Produktes ist - neben der Schmelzetemperatur und der Verweilzeit - die Schergeschwindigkeit im schmelzegefüllten Schneckenkanal.

Für viele Prozesse gilt, daß die Misch-, Dispergier- und Homogenisierungsgüte umso hoher ausfällt, je hoher die Schergeschwindigkeit ist. Beim heutigen Stand der Extrudertechnik sind bei Standardaufbereitungsprozessen mittlere Schergeschwindigkeiten im Schmelzebereich von 20 bis 150 1/sec und mittlere Produktverweilzeiten im gesamten Schneckenbereich von 15 bis 60 sec üblich.

Bei herkömmlichen Extrudern werden die mittleren Schergeschwindigkeiten durch die Schneckendrehzahl und durch das Verhaltnis $D_a/D_i$, nach oben begrenzt. Bei steigenden Schergeschwindigkeiten ergeben sich aber auch höhere spezifische Werte der Energieeinleitung, was zu inakzeptabel hohen Schmelzetemperaturen führen kann. Zusammen mit großen mittleren Verweilzeiten des Produktes im Extruder kann dies zu qualitätsmindernden Produktschädigungen führen, und zwar hinsichtlich des thermischen Aufbaus und der Vernetzung.

Aus JP-A-05116140 ist ein kontinuierlicher biaxialer Extrusionskneter bekannt, der mit Drehzahlen bis zu 1 300 U/min und einer Auslaßtemperatur des aufzubereitenden Harzes bis 320°C arbeitet. Aufgrund der in diesem Dokument dargestellten Prozesse bezieht sich die Druckschrift auf einen gegenläufigen, nicht dicht kämmenden Doppelschneckenextruder.

Der Aufsatz von Fumio Aida in "JAPAN PLASTICS", Band 9, Nr. 1, Januar 1975, Tokyo, Seiten 18 - 25 "Investigation of Ultra-High Speed Extruder Based on Entirely New Design Concept" offenbart ein Verfahren, das mit einem einwelligen Extruder durchgeführt wird. Dabei kommt eine Schneckendrehzahl bis 1 000 U/min zum Einsatz. Grundsätzlich sind jedoch Einwellen-Extruder mit Mehrwellenschneckenextrudern nicht vergleichbar. Insofern ist das vorstehende Dokument lediglich technologischer Hintergrund und bedarf keiner tiefergehenden Erörterung.

Der Erfindung liegt die Aufgabe zugrunde, qualitätserhöhende mittlere Schergeschwindigkeitsbereiche bis zu ≥ 1 000 1/sec bei gleichzeitiger Verkürzung der Einwirkdauer von Temperaturspitzen im Produkt zu realisieren, ohne daß die vorstehend beschriebenen Schwierigkeiten auftreten können.

Die gestellte Aufgabe wird dadurch gelöst, daß der Extruder mit einer Schneckendrehzahl von mindestens 800 Upm bei gleichzeitiger Erhöhung der einleitbaren sogenannten "Drehmomentdichte" pro Schnecke ($M_d/a^3$) von mindestens 11 Nm/cm$^3$ betrieben wird, wobei a der Achsabstand der Schneckenwellen [cm] ist.

Bei der erfindungsgemäß gewählten erhöhten Drehmomentdichte ($M_d/a^3$) von mindestens 11 Nm/cm$^3$ kann der Extruder ohne weiteres mit den hohen Schneckendrehzahlen betrieben werden, ohne daß sich eine unzulässig hohe spezifische Energieeinleitung ergibt. Als weiterer Vorteil ergibt sich ein sehr hoher Produktdurchsatz pro Zeiteinheit.

Zweckmäßigerweise liegt die Produktverweilzeit im Extruder unter 10 Sekunden.

In weiterer Ausgestaltung der Erfindung wird der Extruder mit einer Schneckendrehzahl von bis zu 3.000 Upm bei gleichzeitiger Erhöhung der einleitbaren sogenannten "Drehmomentdichte" ($M_d/a^3$) von bis zu 15 Nm/cm$^3$ und einer /$D_a/D_i$) gleich größer 1,55 und einer mittleren Produktverweilzeit von kleiner 2 Sekunden betrieben. Hierdurch ergeben sich - durch die dann möglichen hohen Durchsätze - besonders niedrige (mittlere) Produktverweilzeiten im Extruder.

Die sich aus den hohen Schneckendrehzahlen und den hohen Produktdurchsätzen ergebenden niedrigen Produktverweilzeiten von 1 bis 10 sec vermindern gleichzeitig die Neigung zum thermischen Abbau oder zur Vernetzung der Produkte.

Eine Erhöhung der Schneckendrehzahl ist innerhalb bestimmter Grenzen auch ohne eine Erhöhung der Drehmomentdichte ($M_d/a^3$) möglich. Durch die bei jedem Verfahren vorhandene maximale Obergrenze der spezifischen Energieeinleitung, die der maximal ertragbaren Schmelzetemperatur (ohne daß Produktschäden auftreten) entspricht, wird jedoch die maximale Schneckendrehzahl begrenzt.

Durch die erfindungsgemäße Ausgestaltung des Verfahrens der eingangs beschriebenen Art werden weitere Anwendungsbereiche erschlossen.

So kann das erfindungsgemäße Verfahren beispielsweise auch zum kontinuierlichen Vormischen im Feststoffförderbereich und zum Mahlen von grobkörnigen Schüttgütern zu Pulver verwendet werden. Es ist aber auch eine Kombination der beiden vorgenannten Prozesse möglich, also ein Homogenisierungsprozeß von Feststoffen, der gegenüber dem Homogenisieren in plastischer Phase deutlich weniger Energie benötigt.

Ein Einsatz des erfindungsgemäßen Verfahrens bei Reaktionsmaschinen ermöglicht darüber hinaus ein effektives Vormischen von Monomeren und Katalysator vor der Reaktion in der Inkubationszeit.

Ein weiterer Vorteil des erfindungsgemäßen Verfahrens besteht darin, daß beispielsweise Pigmente bei der Masterbatchherstellung wesentlich besser dispergiert werden können.

Nachfolgend wird die Erfindung mittels graphischer Darstellung erläutert. Es zeigt

Fig. 1 "mittlerer spez. Energieeintrag",

Fig. 2 "Massendurchsatz und mittlere Produktverweilzeit im Extruder".

Versuche nach dem erfindungsgemäßen Verfahren wurden auf handelsüblichen ZSK-Maschinen (zweiwelliger Schneckenkneter mit gleichsinnig drehenden, dichtkämmenden Schneckenwellen) durchgeführt, wobei der Aufbau der Maschine (Schneckengeometrie, Misch- und Knetelemente) so belassen wurde, wie dieser bisher für den jeweiligen Kunststoffaufbereitungsprozeß mit üblichen Drehzahlen von 200 bis 400 UpM Verwendung fand.

Bei den Versuchen wurden Schneckendrehzahlen von weit über 1000 UpM gefahren und dabei überraschend festgestellt, daß bei gleichzeitiger Erhöhung der eingeleiteten Drehmomentdichte auf 11 bis 14 Nm/cm$^3$ keine wesentliche Erhöhung der Massetemperatur eintritt. Selbst bei Erhöhung der Massetemperatur (z. B. PC > 350°C) auf unüblich hohe Schmelzetemperatur tritt keine Produktschädigung auf, da durch das erfindungsgemäße Verfahren die Verweilzeiten im Extruder weit unter 10 s liegen.

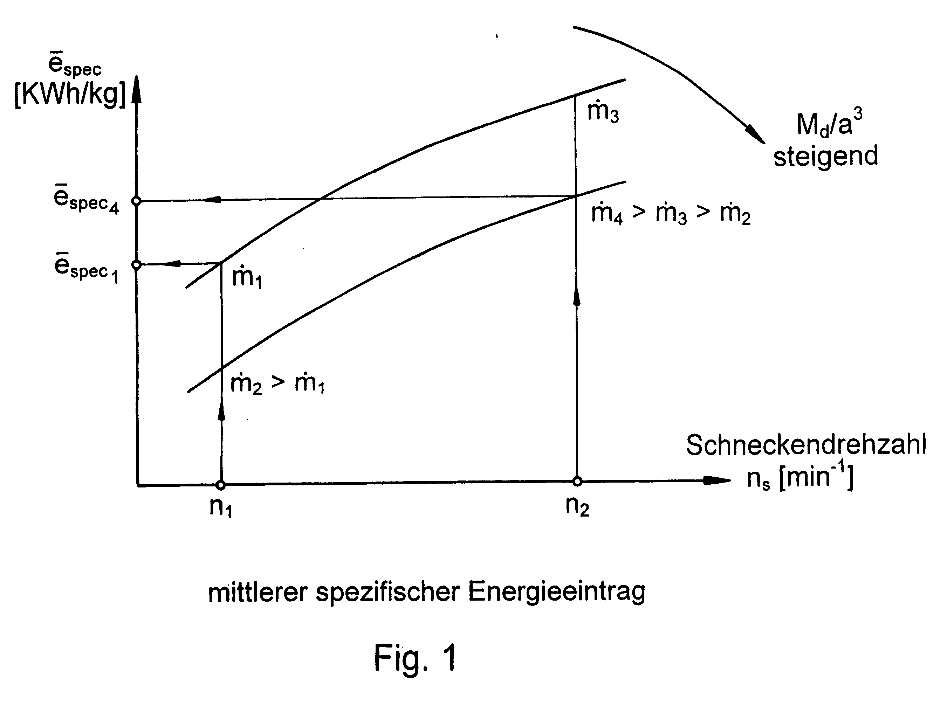

Figur 1 zeigt schematisch den Zusammenhang zwischen der Schneckendrehzahl (Schergeschwindigkeit) und der spezifischen Energieeinleitung für unterschiedliche Drehmomentdichten Md/a$^3$. Unter der Voraussetzung, daß das verfügbare Drehmoment ausgelastet wird, ergeben sich mit steigender Drehmomentdichte (bei konstanter Drehzahl) höhere Durchsätze. Man erkennt, daß aus einer erhöhten Drehmomentdichte kleinere Energieeinleitungen und damit auch kleinere Schmelzetemperaturen resultieren. Andererseits ist zu sehen, daß eine Erhöhung der Schneckendrehzahl zwar generell auch zu einem höheren Massedurchsatz führt, dieser jedoch bei gegebener Drehmomentdichte mit einer erhöhten Energieeinleitung verbunden ist.

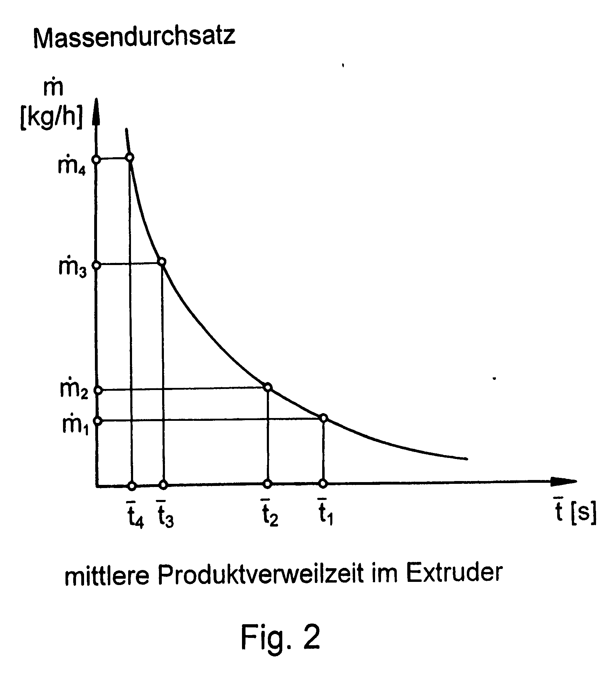

In Figur 2 ist die Abhängigkeit zwischen Durchsatz und Verweilzeit dargestellt. Hier wird deutlich, daß mit Zunahme des Durchsatzes die Zeit, während der das Material hohen Temperaturen ausgesetzt ist, deutlich reduziert wird.

Durchgeführte Versuche haben gezeigt, daß auch eine Massetemperatur, die bisherigen Erfahrungen nach zu einer Qualitätsminderung des Produktes führen mußte, bei genügend kurzer Einwirkdauer qualitätsunschädlich ist. Genügend kurze Verweilzeiten lassen sich jedoch nur durch erhöhte Durchsätze erzielen, die wiederum nur durch eine Erhöhung des möglichen Drehmoments realisierbar ist, da sonst bei gegebener (hoher) Drehzahl die Antriebsleistung der Maschine nicht mehr ausreicht.

Aus Figur 1 ist auch ersichtlich, daß auch ohne Erhöhung der Drehmomentdichte eine Drehzahlerhöhung in bestimmten Grenzen möglich ist. Die jedem Verfahren anhängliche maximale Obergrenze der spezifischen Energieeinleitung ($e_{specmax}$, entspricht der maximal ertragbaren Schmelzetemperatur ohne Produktschädigung bei einer vorgegebenen Verweilzeit) begrenzt diese Drehzahl.

Die heute erhältlichen Maschinen weisen in der Regel $D_a/D_i$-Werte zwischen 1,4 und 1,6 sowie Md/a$^3$-Werte zwischen 5 und 10 auf. Die Betriebsdrehzahlen betragen je nach Baugröße zwischen 200 und 500 UpM, in Ausnahmefällen auch bis 600 UpM.

Der Durchsatz und die Qualität des compoundierten Produktes hängen dabei von der eingesetzten Schneckengeometrie, der Drehzahl und dem maximalen Drehmoment der Maschine ab.

Jede Compoundierung hat zum Ziel, ein homogenes Endprodukt - in der Regel unter Einarbeitung von Zuschlagstoffen - zu erzielen. Die Zuschlagstoffe und vorhandene Inhomogenitäten müssen daher in der Maschine dispergiert und distributiv eingemischt werden. Zum Zerteilen von Partikeln sind mehr oder weniger große Schubspannungen erforderlich, die über die umgebende Matrix auf die Partikel übertragen werden müssen. Die Schubspannung

$\tau$ ergibt sich nach der Gleichung

$$\tau = \eta * \dot{\gamma} \qquad (1)$$

aus der Viskosität $\eta$ des Matrixmediums und der dort aufgezwungenen Schergeschwindigkeit $\dot{\gamma}$. Ein maßgeblicher Faktor für die Dispergier-, Misch- und Homogenisierungsgüte des verarbeiteten Produkts ist daher neben der Schmelzetemperatur und der Verweilzeit die Schergeschwindigkeit $\dot{\gamma}$ [1/sec] im schmelzegefüllten Schneckenkanal.

Betrachtet man diese vereinfacht als mittleren Wert aus dem Quotienten Schneckenumfangsgeschwindigkeit/ Gangtiefe, so gilt (100% Füllgrad im Schneckenkanal vorausgesetzt):

$$\bar{\gamma} = \frac{v_u}{h} = \frac{D_a \cdot \pi \cdot n_s}{(D_a - D_i) / 2} \qquad (2)$$

oder

$$\bar{\gamma} = 2\pi \cdot n_s \cdot \frac{(D_a / D_i)}{(D_a / D_i) - 1}$$

Für viele Prozesse gilt:
Je höher die Schergeschwindigkeit, desto höher ist die Misch-, Dispergier- und Homogenisierungsgüte. Beim heutigen Stand der Extrudertechnik sind bei Standardaufbereitungprozessen mittlere Schergeschwindigkeiten im Schmelzebereich von 20 1/s bis 150 1/s und mittlere Produktverweilzeiten im gesamten Schneckenbereich von 15 bis 60 s üblich.

Bei herkömmlichen Extrudern werden die mittleren Schergeschwindigkeiten wie aus Gleichung (2) ersichtlich, durch die Schneckendrehzahl und durch $D_a/D_i$ nach oben begrenzt.

Bei steigenden Schergeschwindigkeiten ergeben sich durch die Beziehung

$$\bar{e}_{spec} = \frac{1}{\rho_s} \cdot \bar{\eta}_{(\gamma)} \cdot \bar{\gamma}^2 \cdot \bar{t} \qquad (3)$$

bzw.

$$\bar{e}_{spec} = \frac{1}{\rho_s} \cdot \bar{\eta}_{(\gamma)} \cdot \bar{t} \cdot 4\pi^2 \cdot n_s \cdot \left[ \frac{(D_a/D_i)}{(D_a/D_i) - 1} \right]^2$$

aber auch höhere Werte der spezifischen Energieeinleitung $e_{spec}$, was wiederum zu unakzeptabel hohen Schmelzetemperaturen führen kann, da sich die Temperaturerhöhung der Schmelze aus der Gleichtung $\Delta T = e_{spec}/C_p$ berechnet ($C_p$ = spez. Wärmekapazität). Zusammen mit großen mittleren Verweilzeiten des Produktes im Extruder kann also eine hohe Schergeschwindigkeit auch zu qualitätsmindernden Produktschädigungen (thermischer Abbau oder Vernetzung) führen.

Verwendete Formelzeichen:

| $\bar{e}_{spec}$ | mittlere spezifische Energieeinleitung [kWh/kg] |
| $\bar{t}$ | mittlere Verweilzeit des Produkts im Extruder [s] |

$\rho$     Schmelzedichte [kg/m$^3$]

$\bar{\dot{\gamma}}$     mittlere Schergeschwindigkeit [1/sec]

$\bar{\eta}$     mittlere dynamische Viskosität [Pa sec]

$D_a$     Schneckenaußendurchmesser [mm]

$D_i$     Schneckeninnendurchmesser [mm]

$\bar{h}$     Gangtiefe, gemittelt

$n_s$     Schneckendrehzahl [min$^{-1}$]([s$^{-1}$])

$M_d$     Wellendrehmoment, bezogen auf 1 Welle [Nm]

a     Achsabstand der Schneckenwellen [cm]

$v_u$     Umfangsgeschwindigkeit der Schneckenwellen [m/s]

$M_{d/a^3}$     Drehmomentdichte, bezogen auf 1 Welle [Nm/cm$^3$]

$\bar{\tau}$     Schubspannung [Nm/mm$^2$]

$c_p$     spezifische Enthalpie [kJ/kg*K]

$\dot{m}$     Massendurchsatz [kg/h]

$\Delta T$     Massentemperaturerhöhung [K]

## Patentansprüche

**1.** Verfahren zur Durchführung von kontinuierlichen Aufbereitungsprozessen auf gleichsinnig drehenden, dicht kämmenden Doppelscheckenextrudern, die ein Verhältnis $D_a/D_i$ von Schneckenaußendurchmesser $D_a$ zu Schneckeninnnendurchmesser $D_i$ zwischen 1,5 und 1,6 aufweisen, **dadurch gekennzeichnet, daß** der Doppelschneckenextruder mit einer Schneckendrehzahl von mindestens 800 Upm bei gleichzeitiger Erhöhung der einleitbaren sogenannten "Drehmomentdichte" pro Schnecke $M_d / a^3$ von mindestens 11 Nm/cm$^3$ betrieben wird, wobei a der Achsabstand der Schneckenwellen [cm] ist.

**2.** Verfahren nach Anspruch 1, **dadurch gekennzeichnet, daß** die mittlere Produktverweilzeit zwischen 1 und 10 Sekunden liegt.

**3.** Verfahren nach Anspruch 1, **dadurch gekennzeichnet, daß** der Extruder mit einer Schneckendrehzahl von bis zu 3000 Upm bei gleichzeitiger Erhöhung der einleitbaren, sogenannten "Drehmomentdichte" $M_d / a^3$ auf bis zu 15 Nm/cm$^3$ und einem Verhältnis $D_a/D_i$ von Schneckenaußendurchmesser $D_a$ zu Schneckeninnendurchmesser $D_i$ zwischen 1.55 und 1,6 und einer mittleren Produktverweilzeit von weniger als 2 Sekunden betrieben wird.

**4.** Anwendung des Verfahrens nach einem oder mehreren der Ansprüche 1 bis 3, **dadurch gekennzeichnet, daß** das Verfahren zum kontinuierlichen Vermischen im Feststoffförderbereich und/oder zum Mahlen von grobkörnigen Schüttgütern zu Pulver verwendet wird.

**5.** Anwendung des Verfahrens nach Anspruch 4, **dadurch gekennzeichnet, daß** Pigmente bei der Masterbatchherstellung eingemischt werden.

## Claims

**1.** A method of carrying out continuous preparation processes on tightly meshing twin-screw extruders rotating in the same sense and having a ratio $D_a/D_i$ that the screw outer diameter $D_a$ bears to the screw inner diameter $D_i$ in the range of 1.5 and 1.6, **characterized in that** the twin-screw extruder is operated at a screw speed of rotation of at least 800 rpm accompanied with a simultaneous increase of the so-called "torque density" per screw $M_d/a^3$ which can be induced of at least 11 Nm/cm$^3$, $\underline{a}$ being the center distance of axes [cm] of the screw shafts.

**2.** A method according to claim 1, **characterized in that** the mean product dwell time ranges from 1 to 10 seconds.

**3.** A method according to claim 1, **characterized in that** the extruder is operated at a screw speed of rotation of up to 3000 rpm accompanied with a simultaneous increase of the so-called "torque density" $M_d/a^3$ which can be induced to up to 15 Nm/cm$^3$ and a ratio $D_a/D_i$ that the screw outer diameter $D_a$ bears to the screw inner diameter $D_i$ between 1.55 and 1.6 and a mean product dwell time of less than 2 seconds.

**4.** Use of the method according to one or several of claims 1 to 3, **characterized in that** the method is used for the continuous mixing in the solid conveying range and/or for the grinding into powder of coarse-grained bulk goods.

5. Use of the method according to claim 4, **characterized in that** pigments are incorporated during masterbatching.

## Revendications

1. Procédé pour la réalisation d'opérations de transformation continues sur des extrudeuses double vis à entrecroisement serré tournant dans le même sens qui présentent un rapport $D_a/D_i$ du diamètre extérieur de la vis $D_a$ au diamètre intérieur de la vis $D_i$ entre 1,5 et 1,6, **caractérisé en ce que** l'extrudeuse double vis est actionnée à une vitesse de rotation de la vis d'au moins 800 t/min. avec accroissement simultané d'au moins 11 Nm/cm$^3$ de ladite "densité de couple" par vis ($M_d/a^3$) applicable, auquel cas a est l'entraxe des arbres de vis [cm].

2. Procédé selon la revendication 1, **caractérisé en ce que** le temps de séjour moyen du produit se situe entre 1 et 10 secondes.

3. Procédé selon la revendication 1, **caractérisé en ce que** l'extrudeuse est conduite avec une vitesse de rotation de la vis jusqu'à 3.000 t/min. avec un accroissement simultané jusqu'à 15 Nm/cm$^3$ de ladite "densité de couple" ($M_d/a^3$) applicable, un rapport ($D_a/D_i$) du diamètre extérieur de la vis $D_a$ au diamètre intérieur de la vis $D_i$ entre 1,55 et 1,6 et un temps de séjour moyen du produit inférieur à 2 secondes.

4. Utilisation du procédé selon une ou plusieurs des revendications 1 à 3, **caractérisée en ce que** le procédé est mis en oeuvre pour le mélange continu dans le domaine du transport des matières solides et/ou pour le broyage en poudre de produits en vrac à gros grains.

5. Utilisation du procédé selon la revendication 4, **caractérisée en ce que** des pigments sont incorporés lors de la préparation de mélanges-maîtres.

mittlerer spezifischer Energieeintrag

Fig. 1

EP 0 852 533 B2

Massendurchsatz

mittlere Produktverweilzeit im Extruder

Fig. 2